# EUROPÄISCHE PATENTSCHRIFT

(11) **EP 0 536 476 B1**
(45) Veröffentlichungstag und Bekanntmachung des Hinweises auf die Patenterteilung: **23.10.1996**
(21) Anmeldenummer: 92110343.8
(22) Anmeldetag: 19.06.1992
(51) Int. Cl.: A47B 81/06, A47B 88/06, A47B 63/06

(54) **Regal für CD-Platten, Kassetten aller Art, Bücher etc.**
Shelf for CD-disks, cassettes of all types, books etc.
Etagère pour CD-disques, cassettes de tous types, livres etc.

(43) Veröffentlichungstag der Anmeldung: 14.04.1993
(73) Patentinhaber: Kahles, Oskar, D-76456 Kuppenheim (DE)
(72) Erfinder: Kahles, Oskar, D-76456 Kuppenheim (DE)

(56) Entgegenhaltungen:
- EP-A- 0 060 396
- GB-A- 452 773
- US-A- 5 039 180

## Beschreibung

Es ist bekannt, daß CD-Platten, Kassetten aller Art oder Bücher in Regalen übersichtlich aufgestellt werden müssen.

Um insbesondere CD-Platten oder Kassetten rationell aufstellen zu können, gibt es unterschiedliche Regale und Systeme.

Die GB-A-452, 773 beschreibt ein Regal mit einem drehbaren Behälter für Grammophon-Records.

Die EP-A-0060396 beschreibt ein Kleinkassettengerät mit zentraler vertikaler Drehachse.

Die US-A-5 039 180 beschreibt einen polygonalen Behälter, in dem eine Trommel auf einer horizontalen Achse rotiert, auf der sich die drehbar gelagerten Kassettenplätze in sternförmiger Anordnung - jeweils im Schwerpunkt gelagert - befinden und bei der Rotation eine Relativbewegung beschreiben.

Bei all diesen Systemen handelt es sich um allein stehende Behälter, die nicht platzsparend aufzustellen sind.

Bei diesen Systemen ist es nicht möglich, die ganze Tiefe von herkömmlichen Möbeln auszunutzen.

Die Aufgabe der Erfindung besteht darin, ein System zu entwickeln, das diese Nachteile nicht aufweist. Dies wird durch ein Regal erreicht, das die Merkmale des Anspruch 1 aufweist.

In Anspruch 1 der Erfindung liegt die Tatsache zugrunde, daß die CD-Platten, Kassetten aller Art oder Bücher in der Trommel vertikal aufgestellt und diese Trommel horizontal drehbar gelagert ist.

Das erfindungsgemäße Regal nach Anspruch 2, ist an jedem Quadranten mit einer Auszugssperre versehen. Dadurch werden die aufzustellenden Gegenstände wie CD-Platten, Kassetten aller Art oder Bücher gegen Herausfallen beim Drehen gesichert.

Die mit der Erfindung erzielten Vorteile bestehen insbesondere darin, daß in einem Möbelregal mehrere Reihen CD-Platten hintereinander aufgestellt werden können und jede Reihe durch Herausziehen und Drehen der Trommel zur Verfügung steht.

Durch das Herausziehen und Drehen der Trommel sind die aufgestellten Reihen immer zugänglich und durch die richtige Anordnung im Drehsinn, ist die untere Reihe immer lesbar.

Das erfindungsgemäße Regal, eignet sich für viele aufzustellende Gegenstände wie CD-Platten, Kassetten aller Art oder Bücher.

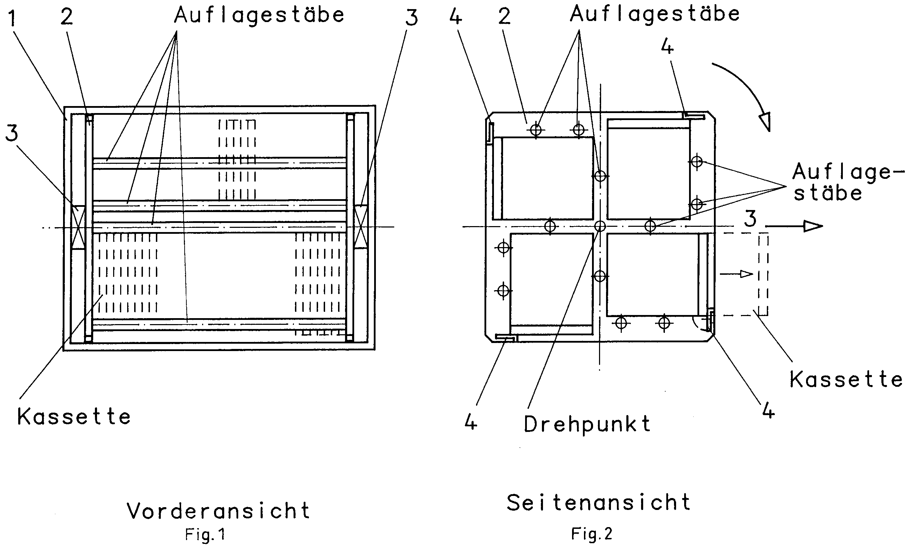

In der Figur 1 ist der Erfindungsgegenstand in einem Ausführungsbeispiel in der Vorderansicht dargestellt.

In der Figur 2 ist der Erfindungsgegenstand in einem Ausführungsbeispiel in der Seitenansicht dargestellt.

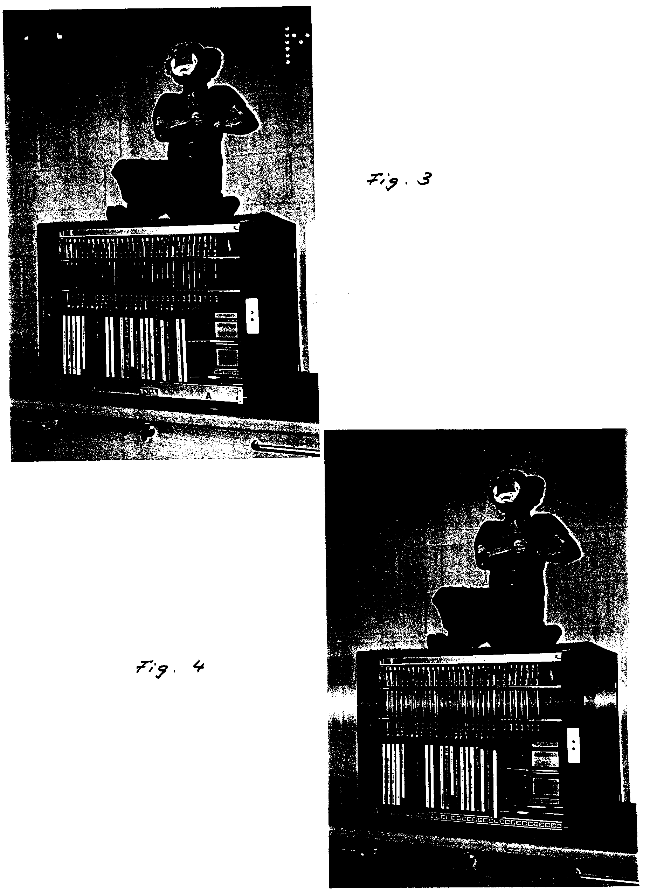

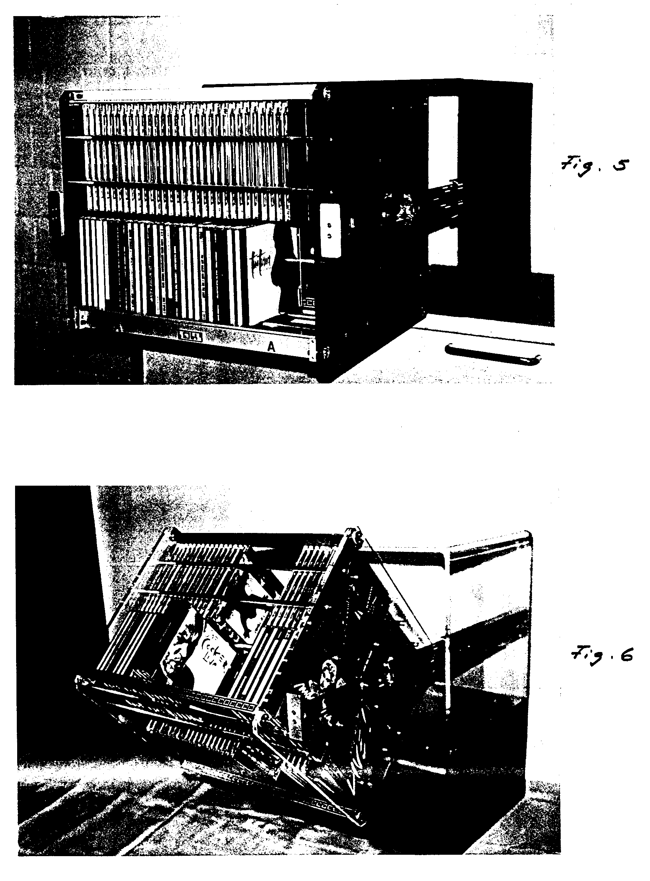

Die Figuren 3 bis 6 zeigen das Regal in verschiedenen Gebrauchsfunktionen.

Das Regal besteht aus einem Gehäuse (1), in dem die Trommel (2) auf Auszugelementen (3) drehbar gelagert ist. Durch Herausziehen der Trommel (2) und anschließendes Drehen, lassen sich alle vier Quadranten in die Entnahmestellung bringen. Gegen herausfallen werden die senkrecht angeordneten CD-Platten, Kassetter aller Art oder Bücher in den jeweilligen Quadranten mit einer Auszugsperre (4) gesichert.

## Patentansprüche

1. Regal mit einer quadratischen oder rechteckigen Trommel (2), die auf zwei Auszugselementen (3) montiert ist und in ausgeschobenem Zustand drehbar gelagert ist, wobei die Trommel (2) vier Quadranten aufweist, wobei alle vier Quadranten durch Drehung der Trommel (2) in die Entnahmestellung gebracht werden.

2. Regal nach Anspruch 1, dadurch gekennzeichnet, daß jeder Quadrant der Trommel (2) mit einer Auszugssperre (4) versehen ist.

## Claims

1. Shelf with a square or rectangular drum (2) mounted on two pull-out elements (3) which is rotatable when pulled out, whereby the drum (2) has four quadrants, all of which are brought to the extraction position by turning the drum (2).

2. Shelf as described in claim 1, but distinguished by the fact that each quadrant of the drum (2) is fitted with a pull-out lock (4).

## Revendications

1. Etagére avec un tambour (2) carré ou rectangulair, monté sur deux éléments étirables (3) et rotatif en position étirée. Le tambour (2) présente quatre quadrants qui sont tous amenés en position de reprise par une rotation du tambour (2).

2. Etagére selon spécification n° 1.
Caractéristique: chaque quadrant du tambour (2) est muni d'un blocage d'étirement (4).
